**Europäisches Patentamt**

**European Patent Office**

**Office européen des brevets**

(19)

(11) **EP 1 064 573 B1**

(12) ## EUROPÄISCHE PATENTSCHRIFT

(45) Veröffentlichungstag und Bekanntmachung des Hinweises auf die Patenterteilung:
**14.05.2003 Patentblatt 2003/20**

(21) Anmeldenummer: **99915637.5**

(22) Anmeldetag: **17.03.1999**

(51) Int Cl.[7]: **G02B 6/124**, G01J 3/18

(86) Internationale Anmeldenummer:
**PCT/EP99/01744**

(87) Internationale Veröffentlichungsnummer:
**WO 99/047952 (23.09.1999 Gazette 1999/38)**

(54) **DÜNNSCHICHTSPEKTROMETER MIT TRANSMISSIONSGITTER**

THIN-FILM SPECTROMETER WITH TRANSMISSION GRID

SPECTROMETRE A COUCHE MINCE AVEC RESEAU DE TRANSMISSION

(84) Benannte Vertragsstaaten:
**DE FR GB IT**

(30) Priorität: **19.03.1998 DE 19811989**

(43) Veröffentlichungstag der Anmeldung:
**03.01.2001 Patentblatt 2001/01**

(73) Patentinhaber:
- **Müller, Jörg, Prof. Dr.Ing. habil**
  **21244 Buchholz (DE)**
- **Sander, Dietmar**
  **22301 Hamburg (DE)**

(72) Erfinder:
- **Müller, Jörg, Prof. Dr.Ing. habil**
  **21244 Buchholz (DE)**
- **Sander, Dietmar**
  **22301 Hamburg (DE)**

(74) Vertreter: **Schaefer, Konrad, Dipl.-Phys.**
**Schaefer & Emmel**
**Gehölzweg 20**
**22043 Hamburg (DE)**

(56) Entgegenhaltungen:
**DE-A- 19 602 584        US-A- 4 938 553**

- **SANDER D ET AL: "BREITBANDIGES OPTISCHES MIKROSPEKTROMETER ALS MIKROANALYSESYSTEM" TECHNISCHES MESSEN TM, Bd. 64, Nr. 4, 1. April 1997 (1997-04-01), Seiten 143-146, XP000704274 ISSN: 0171-8096**
- **SANDER D ET AL: "MICROSPECTROMETER WITH SLAB-WAVEGUIDE TRANSMISSION GRATINGS" APPLIED OPTICS, Bd. 35, Nr. 27, 20. September 1996 (1996-09-20), Seiten 4096-4101, XP000627426 ISSN: 0003-6935**

EP 1 064 573 B1

**Beschreibung**

Die Erfindung betrifft ein Spektrometer nach dem Oberbegriff des Anspruches 1.

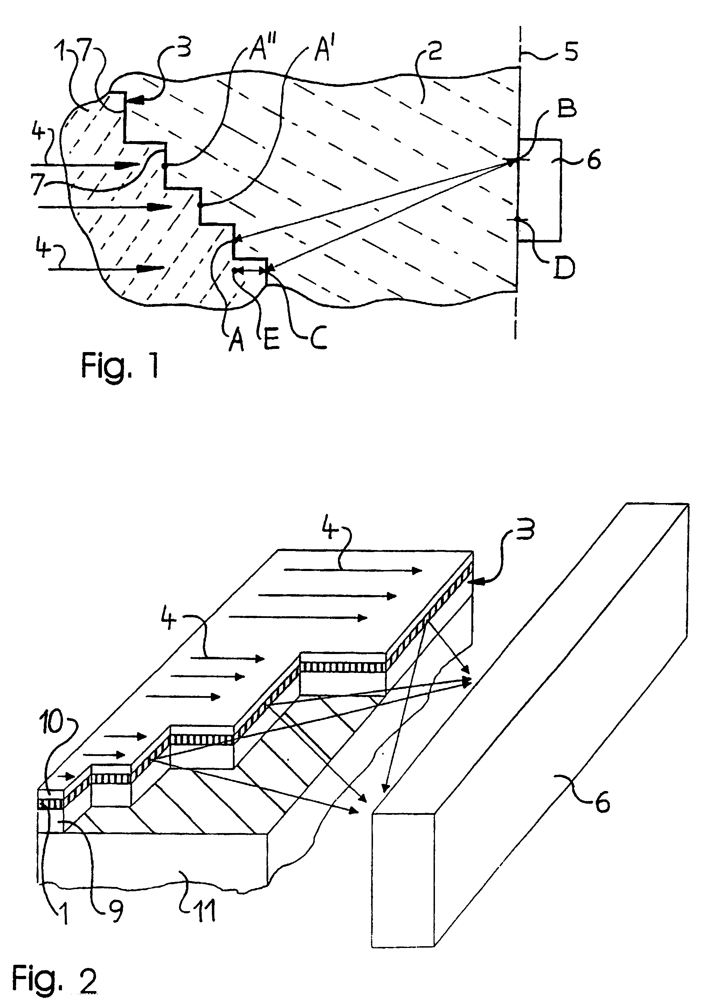

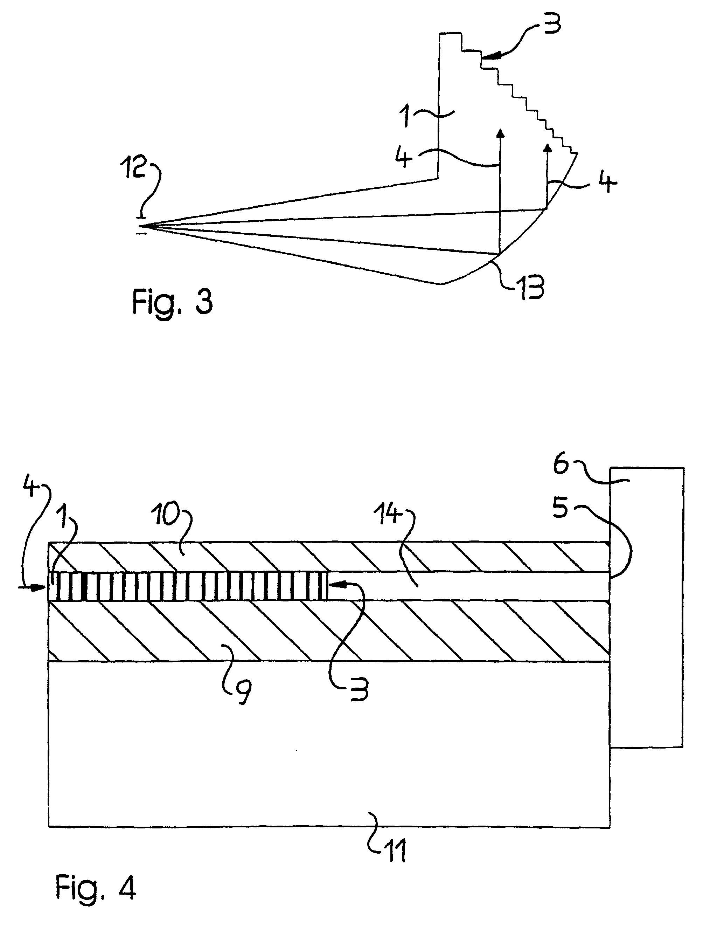

Dünnschichtspektrometer mit einem Schichtaufbau mit einer Lichtleiterschicht und einem Stufengitter sind, wie die EP 0 250 824 A1 zeigt, in zwei grundsätzlichen Bauvarianten des Gitters möglich und zwar zum einen als Reflexionsgitter, wie dort in Fig. 1 gezeigt, und zum anderen als Transmissionsgitter, wie dort in den Figuren 3 bis 6 gezeigt.

Ein Reflexionsgitter hat den Vorteil, daß es, wie in der erwähnten Fig. 1 gezeigt, mit einer Gesamtkrümmung selbstfokussierend ausgebildet sein kann. Ein Transmissionsgitter benötigt dagegen gesonderte Fokussiereinrichtungen, wie in WO 97/27 460 dargestellt. Das Transmissionsgitter ergibt jedoch, wie in der letztgenannten Schrift erläutert, den wesentlichen Vorteil gegenüber dem Reflexionsgitter, daß bei geeigneter Wahl der Brechungsindizes in der Lichtleiterschicht und in dem zweiten Medium die Stufenhöhe bei derselben Wellenlängeauflösung des Spektrometers größer sein kann, also das Gitter mit relativ einfachen Herstellungsverfahren kostengünstig und präzise herstellbar ist.

Nach dem Stand der Technik sind bei beiden Gittertypen die Gitter mit durchgehend konstanten Stufenabmessungen ausgebildet.

Es sind auch nicht gattungsgemäße fokussierende Stufengitter bekannt, bei denen sich die Stufenabmessungen in Treppenrichtung kontinuierlich ändern. Solche Stufengitter gehören grundsätzlich zum Typ der Fresnel-Zonenplatte, wie sie z.B. beschrieben ist in

Grimsehls Lehrbuch der Physik 1944, Teubner Verlag, S. 387.

Eine modernere Anwendungen dieses Prinzips finden sich in dem Aufsatz

Collimating cylindrical diffractive lenses:
rigorous electromagnetic analysis and scalar approximation von Elias N. Glytsis et al.,
in APPLIED OPTICS / Vo. 37, No. 1 / 1. Januar 1998, Seiten 34 - 43.

Bei dieser Konstruktion sind die Stufenhöhen konstant. Es ändert sich nur die Stufenbreite.

Gemeinsam ist bei allen Gitterkonstruktionen nach dem Fresnel-Zonenplattenprinzip, daß sie nur eine einzige Wellenlänge auf einen Brennpunkt abbilden können. Bei anderen Wellenlängen ergibt sich keine Abbildung, so daß diese Konstruktion als Spektrometer grundsätzlich nicht verwendbar und daher gattungsfremd ist.

Eine weitere nicht gattungsgemäße Gitterkonstruktion ist aus dem Aufsatz

Diffractive phase elements that implement wavelength demultiplexing

and spatial annular focusing simultaneously
von Bi-Zhen Dong et al.
in J. Opt. Soc. Am. A/Vol. 14, No. 1, Januar 1997, Seiten 44 - 48

beschrieben. Bei diesem Gitter sind die Linienabstände konstant und die Stufenhöhen nach einem komplizierten, völlig unregelmäßigen Höhenrelief angeordnet, das in einer sehr aufwendigen Rechnung nur näherungsweise fokussierende Bedingungen für unterschiedliche Wellenlängen schafft. Ein solches Höhenrelief ist dort in Fig. 2a dargestellt. Fig. 2b zeigt das Spektrum mit den entstehenden Beugungsfehlern (Falschlinien). Für praktische Anwendungen ist diese Konstruktion ersichtlich nicht geeignet.

Die Aufgabe der vorliegenden Erfindung besteht darin, ein gattungsgemäßes Spektrometer mit einem Transmissionsgitter zu schaffen, das auf einfache Weise das Spektrum fokussiert.

Diese Aufgabe wird erfindungsgemäß mit den Merkmalen des Anspruches 1 gelöst.

Das erfindungsgemäße Gitter kann in seiner Formgebung der einzelnen, untereinander ähnlichen, jedoch in einer Treppenrichtung immer kleiner werdenden Stufen nach der im Kennzeichen des Anspruches 1 angegebenen Bedingung sehr einfach in aufeinanderfolgenden Rechenschritten Stufe für Stufe berechnet werden. Ein Computer schafft dies für die erforderlichen, z.B. 1000 Stufen, in sehr kurzer Zeit. Dabei werden jeweils die Lichtwege (geometrische Weglänge multipliziert mit dem Brechungsindex im jeweiligen Medium) bis zum Gitter und von dort weiter bis zum Brennpunkt berechnet und zwar jeweils für zwei benachbarte Frontflächen des Gitters. Diese Berechnungen werden für zwei ausgewählte Wellenlängen im zu analysierenden Spektrum mit zuvor an der gewollten Stelle festgelegten Brennpunkten für jede Wellenlänge durchgeführt. Dabei ergibt sich für jede Wellenlänge und für zwei an einer Stufe benachbarte Frontflächen in dem der Wellenlänge zugehörigen Brennpunkt konstruktive Interferenz. Es ergibt sich dabei auch für die Interferenz einer Frontfläche mit dem Licht der weiteren, in einer Richtung folgenden Frontflächen konstruktive Interferenz mit einer Lichtwegdifferenz mit höheren Vielfachen der Wellenlänge. Schließlich ergibt sich hierbei, daß ein solches Gitter nicht nur die beiden ausgewählten Wellenlängen in den beiden Brennpunkten fokussiert, sondern auch dazwischenliegende Wellenlängen und außerhalb dieses Intervalles liegende Wellenlängen in Brennpunkten fokussiert, die mit nur sehr geringen, nicht störenden Abweichungen auf der durch die beiden ausgewählten Brennpunkte liegenden Brennebene liegen. Es wird auf diese Weise ein Spektrometer geschaffen, das mit einem Transmissionsgitter, unter Beibehaltung dessen günstiger Eigenschaften hinsichtlich der verwendbaren größeren Stufenhöhen, die Abbildung des Spektrums mit dem Gitter selbst ergibt, so daß zusätzliche Fokussiereinrichtungen entbehrlich sind. Dadurch wird die Konstruktion gegenüber bekannten Spektrometern mit Transmissionsgitter und zusätzlichen Fokussiereinrichtungen erheblich vereinfacht.

Vorteilhaft sind die Merkmale des Anspruches 2 vorgesehen. Hier endet der Schichtaufbau des Spektrometers am Stufengitter, so daß sich die Schichtherstellung vereinfachen läßt.

Alternativ sind die Merkmale des Anspruches 3 vorgesehen, bei dem das zweite Medium durch eine zweite, jenseits des Stufengitters weiterführende Lichtleiterschicht gebildet ist. Hierbei bestehen bessere Möglichkeiten durch Wahl der Medien der ersten und zweiten Lichtleiterschicht eine günstige, sehr kleine Differenz der am Stufengitter aneinandergrenzenden Brechungsindizes zu erhalten mit der, wie in WO 97/27 460 erläutert, bei gegebener Wellenlängenauflösung größere Stufenhöhen möglich sind.

Vorteilhaft sind die Merkmale des Anspruches 4 vorgesehen. Hierbei gestaltet sich durch den parallelen Lichteinfall auf das Gitter die Gitterberechnung nach Anspruch 1 relativ einfach. Es sind jedoch Linsen oder Hohlspiegel erforderlich, um das von einem Eintrittsspalt stammende Licht zu parallelisieren.

Vorteilhaft sind daher die Merkmale des Anspruches 5 vorgesehen, bei dem das Gitter für divergierend einfallendes Licht berechnet ist.

In den Zeichnungen ist die Erfindung beispielsweise und schematisch dargestellt.
Es zeigen:

Fig. 1 die grundsätzlichen geometrischen Gegebenheiten im Schnitt durch ein Stufengitter,

Fig. 2 eine dreidimensionale Ansicht eines Spektrometers mit Schichtaufbau und Luft als zweitem Medium,

Fig. 3 schematisch die Draufsicht auf ein Spektrometer mit einem Hohlspiegel zur Parallelisierung des von einem Eintrittsspalt kommenden Lichtes,

Fig. 4 in einem Längsschnitt durch den Schichtaufbau ein Spektrometer mit einer weiterführenden zweiten Lichtleiterschicht als zweites Medium und

Fig. 5 eine Darstellung entsprechend Fig. 1 mit divergentem Lichteinfall auf das Gitter.

Fig. 1 zeigt in einem Schnitt parallel zu den Lichtwegen eine Lichtleiterschicht 1 aus einem transparenten Medium mit dem Brechnungsindex $n_1$, die in einer als Stufengitter 3 ausgebildeten Grenzfläch mit senkrecht zur Zeichnungsebene stehenden Flächen an ein zweites Medium 2 angrenzt, das den Brechungsindex $n_2$ aufweist. Das Stufengitter 3 wird durch die Lichtleiterschicht 1 mit parallelem, zu analysierendem Licht 4 beleuchtet. An einer Endfläche 5 des zweiten Mediums 2 soll als Brennebene das Spektrum abgebildet werden, um von einem Sensor, z.B. einem Zeilensensor 6 aufgenommen zu werden.

Licht tritt vom Gitter 3 in das zweite Medium 2 von den Frontflächen 7 des Gitters aus. Berechnet man die Lichtwege von mittleren Punkten C, A, A', A" der Frontflächen 7 aus, so lassen sich die Bedingungen für konstruktive Interferenz berechnen. Das dargestellte treppenförmig in einer Treppenrichtung kontinuierlich größer werdende Stufengitter 3 wird gemäß Kennzeichen des Anspruches 1 wie folgt in seiner Form berechnet:

Licht fällt gemäß Fig. 1 von links in Richtung der Strahlen 4 auf das Gitter 3. Es wird zunächst eine Wellenlänge $\lambda_b$ untersucht. Dieses Licht der Wellenlänge $\lambda_b$ soll im Brennpunkt B auf der Endfläche 5 fokussiert werden.

Im zweiten Medium 2 legt das Licht von dem Punkt C auf einer Frontfläche des Gitters bis zum Brennpunkt B den Weg CB zurück. Der Lichtweg entspricht dem Produkt $CB \cdot n_2$. Auf der benachbarten Frontfläche der nächsten Stufe liegt der Punkt A. Bis zu diesem ist der Lichtweg in der Lichtleiterschicht 1 um die Strekke $EC \cdot n_1$ kleiner. Der Lichtweg im Medium 2 beträgt $AB \cdot n_2$. Konstruktive Interferenz im Punkt B liegt vor, wenn die Formel

$$AB \cdot n_2 = BC \cdot n_2 + CE \cdot n_1 + m\lambda_b$$

erfüllt ist. Die Gesamtlichtwege des Lichtes durch diese beiden benachbarten Gitterstufen (C und A) für die Wellenlänge $\lambda_b$ unterscheiden sich also um ein Vielfaches dieser Wellenlänge.

Nun wird die erwähnte geometrische Konstruktion, ausgehend von den Punkten C und A, in bezug auf den Brennpunkt D gebildet. Es wird wiederum die oben erwähnte Gleichung aufgestellt, jedoch mit der Wellenlänge $\lambda_d$. Man erhält zwei unabhängige Gleichungen mit zwei Unbekannten in Form der Koordinaten des zu berechnenden Punktes A, wenn vom Punkt C als festen Ursprungspunkt und den beiden zuvor festgelegten Punkten B und D ausgegangen wird. Aus zwei Gleichungen mit zwei Unbekannten kann z.B. in einem XY-Koordinatensystem die Lage des zu berechnenden Punktes A ermittelt werden.

Mit derselben Berechnung kann nun, ausgehend vom Punkt A der Punkt A' und in einem nächsten Schritt, ausgehend von diesem, der Punkt A" berechnet werden. In dieser Weise kann das gesamte Gitter in der Form seiner Stufen festgelegt werden durch Errechnung jeweils der Punkte A, A', A" usw. als Mittelpunkte der Frontflächen.

Bei dieser Berechnungsart muß jeweils von einer Stufe zur nächsten weitergerechnet werden, wobei in der oben erwähnten Gleichung jeweils der letzte Term m · $\lambda_b$ bzw. m · $\lambda_d$ denselben Wert für m aufweist, beispielsweise 1.

Bei dieser Berechnungsart schrittweise von einer Stufe zur nächsten fortschreitend, würden Verrundungsfehler laufend addiert werden. Deshalb ist eine andere Berechnungsweise günstiger, wie folgt:

Zunächst wird, wie oben angegeben, für beide Wellenlängen, ausgehend von C, der Punkt A berechnet. Im nächsten Schritt wird, ausgehend von C, der Punkt A' direkt berechnet. Es ergeben sich für die beiden Wellenlängen dieselben Gleichungen, wie oben angegeben, jedoch ist nun m um 1 erhöht, also auf m + 1. Im nächsten Schritt wird dann, ausgehend von C, direkt A'' berechnet mit m + 2 usw.. Ersichtlich ist hierbei die Rechengenauigkeit größer, da stets vom selben Punkt C aus gerechnet wird.

Ein nach diesem Algorithmus berechnetes Gitter 3 fokussiert die Wellenlängen $\lambda_b$ und $\lambda_d$ völlig fehlerfrei in den Punkten B und D. Es werden aber auch dazwischenliegende Wellenlängen zwischen den Punkten B und D in der Ebene 5 fokussiert und auch Wellenlängen jenseits der Wellenlängen $\lambda_b$ und $\lambda_d$ außerhalb der Punkte B und D. Dabei ist die spektrale Abbildung in der Ebene 5 fehlerfrei. Es entstehen lediglich sehr kleine, vernachlässigbare Fokussierfehler außerhalb der Punkte B und D.

Ein solches Gitter kann zum Arbeiten im optischen Bereich bei Verwendung von Glas für die Lichtleiterschicht 1 und Luft für das zweite Medium 2 bei den Wellenlängen $\lambda_b$ = 400 nm und $\lambda_d$ = 550 nm bei dem Abstand CD von 10mm einen Abstand der Brennpunkte BD von 2 mm aufweisen. Dabei ergibt sich eine Gitterperiode von etwa 1 μm, die sich über beispielsweise $10^3$ Stufen auf 5 μm näherungsweise linear vergrößert. Die minimale Strukturbreite des so geschaffenen selbstfokussierenden Gitters unterschreitet dabei nur wenig die Strukturgrößen eines nicht fokussierenden Gitters mit konstanter Gitterperiode.

Die Berechnung wird sehr einfach mit einem Computer schrittweise durchgeführt. In die Berechnungen gehen als Parameter des zu berechnenden Gitters ein: die Brechungsindices der beiden an das Gitter grenzenden Medien, die Lage der beiden Brennpunkte B und D für zwei zuvor festgelegte Wellenlängen des Spektrums in ihrem Abstand zueinander sowie in ihrem Abstand zum Gitter und der Startpunkt C der Berechnung. Es ergibt sich dabei auf jeden Fall ein Gitter, bei dem die Stufengröße in einer Richtung anwächst. Das Gitter kann dabei für einen bestimmten Abstand der Punkte B und D in sich im wesentlichen gerade verlaufen, wie in Fig. 1 dargestellt. Liegen die Brennpunkte B und D enger zusammen, so hat es von den Brennpunkten her gesehen eine konvexe Grundkrümmung, bei weiter auseinanderliegenden Brennpunkten eine konkave Grundkrümmung.

Eine Konstruktion mit Luft als zweitem Medium 2 ist in Fig. 2 in ihrem Gesamtaufbau dargestellt. Die Lichtleitschicht 1 wird oben und unten von Deckschichten 9 und 10 kleineren Brechungsindex bedeckt. Dieser Schichtaufbau ist auf einem Träger 11 angeordnet. Am Gitter 3 endet der Schichtaufbau. Das durch die Lichtleiterschicht 1 ankommende parallele Licht 4 wird auf dem bereits in Fig. 1 dargestellten Zeilensensor 6 fokussiert.

Fig. 3 zeigt schematisch eine Möglichkeit, ausgehend von einem Spalt 12, kommendes divergentes Licht an einem Hohlspiegel 13, z.B. einer Grenze der Lichtleitschicht 1 zu einem Material niedrigen Brechungsindex, zu parallelisieren, damit es parallel auf das Stufengitter 3 fällt.

Fig. 4 zeigt in einem Längsschnitt durch den Schichtaufbau einer Konstruktion ähnlich wie Fig. 2 mit einem Träger 11, der Lichtleiterschicht 1 und den Deckschichten 9 und 10, bei der jedoch die Lichtleiterschicht 1 am Gitter 3 nicht an Luft (wie bei der Konstruktion der Fig. 2) sondern an eine weiterführende zweite Lichtleiterschicht 14 grenzt, an deren Endfläche 5 der Zeilensensor 6 angeordnet ist.

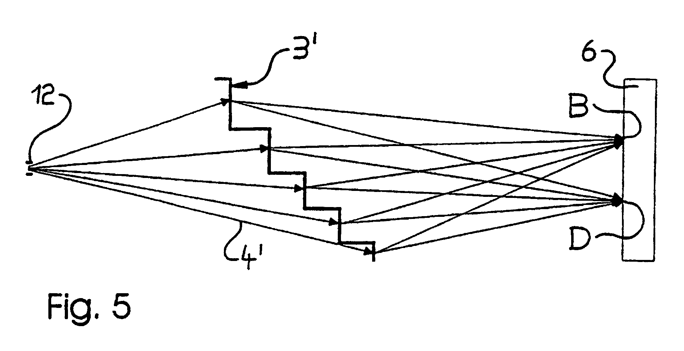

Fig. 5 zeigt eine schematische Darstellung der Abbildungsgeometrie entsprechend der Darstellung der Fig. 1. Es ist hier erläutert, daß auch bei divergent von dem Spalt 12 auf ein Gitter 3' fallendem Licht 4' fokussierende Bedingungen, also Abbildung einer Wellenlänge $\lambda_b$ auf den Brennpunkt B und einer Wellenlänge $\lambda_d$ auf den Brennpunkt D erreichbar ist. Die eingangs genannte Lichtweggleichung ist nur geringfügig zu korrigieren, wobei auch in der Lichtleiterschicht 1 Dreiecke ausgehend von dem Spalt 12 zu berücksichtigen sind.

**Patentansprüche**

1. Spektrometer mit einer dünnen Lichtleiterschicht (1) in einem in Dünnschichttechnologie hergestellten Schichtaufbau zwischen zwei Deckschichten (10, 9) niedrigeren Brechungsindexes, mit einer ein Gitter (3, 3') aufweisenden Endfläche der Lichtleiterschicht, die durch die Lichtleiterschicht hindurch mit zu analysierendem Licht (4, 4') bestrahlt wird, und mit einem Zeilensensor (6), auf den das Spektrum (B, D) abgebildet wird, wobei das treppenförmige Stufengitter (3, 3') mit transparenten Stufenflächen (7) und mit Stufenkanten senkrecht zur Schichtebene ausgebildet ist und an den Stufenflächen des Gitters ein zweites Medium (2) angrenzt, dessen Brechungsindex kleiner ist als der der Lichtleiterschicht, **dadurch gekennzeichnet, daß** das Gitter (3, 3') in Treppenrichtung kontinuierlich die Höhe und Breite seiner Stufen derart ändert, daß für zwei ausgewählte Wellenlängen ($\lambda_b$, $\lambda_d$) jeweils die Gesamtlichtwege durch die Lichtleiterschicht (1) und das zweite Medium (2) bis zu einem der jeweiligen Wellenlänge zugehörigen Brennpunkt (B, D) für alle benachbarten Frontflächen (7) des Gitters (3) eine Längendifferenz von demselben Vielfachen der jeweiligen Wellenlänge aufweisen.

**2.** Spektrometer nach Anspruch 1, **dadurch gekennzeichnet, daß** das zweite Medium (2) Luft ist.

**3.** Spektrometer nach Anspruch 1, **dadurch gekennzeichnet, daß** das zweite Medium aus einer an das Gitter (3) angrenzenden zweiten Lichtleiterschicht (14) gebildet ist.

**4.** Spektrometer nach Anspruch 1, **dadurch gekennzeichnet, daß** die Gitterstufen für parallel einfallendes Licht (4) berechnet sind.

**5.** Spektrometer nach Anspruch 1, **dadurch gekennzeichnet, daß** die Gitterstufen für divergent einfallendes Licht (4') berechnet sind.

## Claims

**1.** Spectrometer including a thin light guiding layer (1) with a layer structure produced using thin-film technology between two cover layers (10, 9) with a lower refractive index, an end surface of the light guiding layer having a grid (3, 3'), which is irradiated through the light guiding layer with light (4, 4') to be analysed and a line scanning sensor (6), on which the spectrum (B, D) is imaged, the stepped grid (3, 3') being constructed with transparent step surfaces (7) and with step edges perpendicular to the plane of the layer and, at the step surfaces of the grid, adjoining a second medium (2), the refractive index of which is smaller than that of the light guiding layer, **characterised in that** the height and breadth of the steps of the grid (3, 3') continuously changes in the step direction such that for two selected wavelengths ($\lambda_b$, $\lambda_d$) the total light paths through the light guiding layer (1) and the second medium (2) to a focal point (B, D) associated with one of the wavelengths in question have a difference in length for all adjacent front surfaces (7) of the grid (3) which is the same multiple of the said wavelength.

**2.** Spectrometer as claimed in Claim 1, **characterised in that** the second medium (2) is air.

**3.** Spectrometer as claimed in Claim 1, **characterised in that** the second medium is constituted by a second light guiding layer (14) adjoining the grid (3).

**4.** Spectrometer as claimed in Claim 1, **characterised in that** the grid steps are calculated for parallel incident light (4).

**5.** Spectrometer as claimed in Claim 1, **characterised in that** the grid steps are calculated for divergent incident light (4').

## Revendications

**1.** Spectromètre avec une fine couche de guidage de lumière (1) dans une structure de couches réalisée grâce à la technologie des fines couches entre deux couches de couverture (10, 9) avec un indice de réfraction plus faible, avec une surface terminale de la couche de guidage de lumière comportant un réseau (3, 3') exposé à la lumière à analyser (4, 4') à travers la couche de guidage de lumière et avec un capteur de lignes (6) sur lequel le spectre (B, D) se forme, le réseau à échelons (3, 3') en escalier étant muni de surfaces à échelons transparentes (7) avec des arêtes à échelons perpendiculaires au plan de la couche et étant en contact, sur les surfaces à échelons du réseau, avec un deuxième milieu (2) dont l'indice de réfraction est inférieur à celui de la couche de guidage de lumière, **caractérisé en ce que** le réseau (3, 3') change continuellement de hauteur et de largeur dans la direction des escaliers de telle sorte que, pour deux longueurs d'onde sélectionnées ($\lambda b$ et $\lambda d$), les chemins optiques à travers la couche de guidage de la lumière (1) et le deuxième milieu (2) jusqu'à un des foyers (B, D) correspondant à la longueur d'onde respective présente, pour toutes les surfaces frontales voisines (7) du réseau (3) une différence de longueur du même multiple de la longueur d'onde respective.

**2.** Spectromètre selon la revendication 1, **caractérisé en ce que** le deuxième milieu (2) est de l'air.

**3.** Spectromètre selon la revendication 1, **caractérisé en ce que** le deuxième milieu est constitué d'une deuxième couche de guidage de la lumière (14) en contact avec le réseau (3).

**4.** Spectromètre selon la revendication 1, **caractérisé en ce que** les échelons du réseau sont calculés pour de la lumière à incidence parallèle (4).

**5.** Spectromètre selon la revendication 1, **caractérisé en ce que** les échelons du réseau sont calculés pour de la lumière à incidence divergente (4').

Fig. 1

Fig. 2

Fig. 3

Fig. 4

Fig. 5